# FASCICULE DE BREVET EUROPEEN

(11) **EP 0 930 277 B1**
(45) Date de publication et mention de la délivrance du brevet: **16.03.2005**
(21) Numéro de dépôt: 99400102.2
(22) Date de dépôt: 18.01.1999
(51) Int. Cl.: C03B 37/018, B01D 53/64, B01D 53/68

(54) **Procédé de traitement de rejets gazeux d'une unité de fabrication d'une préforme de fibre optique pour récupération de germanium**
Verfahren zur Behandlung von Abgasen einer Vorrichtung zur Herstellung von Vorformen von optischen Glasfasern zur Germanium-Zurückgewinnung
Process for treating exhaust gases from a unit for the fabrication of optical fiber preforms, for recovering germanium

(30) Priorité: 19.01.1998 FR 9800487
(43) Date de publication de la demande: 21.07.1999
(73) Titulaire: Draka Comteq B.V., 1018 TX Amsterdam (NL)
(72) Inventeur: Appriou, André, 69160 Tassin la Demi Lune (FR); Calvo, Laurent, 59000 Lille (FR); Lavanant, Gérard, 59130 Lambersart (FR)
(74) Mandataire: Blokland, Arie

(56) Documents cités:
- EP-A- 0 765 845
- DE-A- 3 206 145
- US-A- 4 385 915

## Description

L'invention se rapporte à un procédé de traitement de rejets gazeux provenant d'une unité de fabrication d'une préforme de fibre optique et contenant du germanium.

De manière connue, une unité de fabrication d'une préforme d'une fibre optique fait réagir des gaz du type chlorure de silicium SiCl₄ et tétrachlorure de germanium GeCl₄ avec de l'oxygène à haute température. L'oxyde de silicium SiO₂ produit est déposé en couches successives pour former une préforme cylindrique. L'oxyde de germanium est déposé dans des couches centrales de la préforme pour former un coeur présentant une différence d'indice de réfraction avec la silice.

Seule une faible fraction de tétrachlorure de germanium réagit avec l'oxygène. Le tétrachlorure de germanium qui n'a pas réagi, ainsi que l'oxyde de germanium qui ne s'est pas déposé sont rejetés par l'unité de fabrication avec du chlorure d'hydrogène HCl. Ces gaz ne peuvent être rejetés tels quels dans l'environnement. C'est pourquoi il est nécessaire de les traiter.

D'autre part, on cherche également à récupérer le germanium de manière à préserver l'environnement d'une part, et d'autre part à recycler le germanium afin de le réutiliser ultérieurement pour la fabrication de préformes de fibres optiques afin de réduire les coûts de fabrication.

Un procédé connu du document US-4 385 915 permet de traiter ces rejets gazeux et de récupérer le germanium. Il comprend notamment les étapes suivantes :
- formation d'un effluent liquide à partir des rejets gazeux, par exemple en faisant réagir ces rejets gazeux avec de la soude ; l'effluent liquide contient alors non seulement le germanium, mais également de l'hypochlorite
- réduction de l'hypochlorite par addition d'eau oxygénée par exemple
- précipitation du germanium dans l'effluent liquide ainsi traité par addition de sulfate de magnésium.

La précipitation du germanium contenu dans l'effluent à l'aide de sulfate de magnésium libère dans le surnageant des sulfates qui sont des composés nocifs pour l'environnement.

Le but de la présente invention est donc de mettre au point un procédé de traitement de rejets gazeux contenant du germanium dans lequel on évite de libérer après précipitation des composés nocifs à l'environnement.

L'invention propose à cet effet un procédé de traitement de rejets gazeux provenant d'une unité de fabrication d'une préforme de fibre optique et contenant du germanium, ledit procédé comprenant les étapes suivantes
- formation d'un effluent aqueux à partir desdits rejets gazeux,
- précipitation du germanium dons ledit effluent aqueux,
**caractérisé en ce que** ladite précipitation est effectuée par addition de magnésie MgO dans ledit effluent aqueux.

L'addition de la magnésie permet de faire précipiter le germanium contenu dans l'effluent en vue de le récupérer pour le recycler, sans libérer de composés nocifs pour l'environnement tels que les sulfates.

Le germanium précipite sous la forme de germanates. La quantité de magnésie introduite dans l'effluent correspond à un rapport stoechiométrique entre le magnésium et le germanium typiquement de 1,5 pour 1, et traduit une faible consommation de magnésie pour faire précipiter le germanium.

Selon un aspect de l'invention, les rejets gazeux contiennent du germanium sous forme de tétrachlorure de germanium GeCl₄ et l'étape de formation d'un effluent liquide consiste à faire réagir de la soude avec ces rejets gazeux, de sorte que l'effluent liquide contient le germanium et de l'hypochlorite.

Afin de réduire l'hypochlorite, on peut utiliser par exemple de l'acide formique.

La magnésie utilisée peut être par exemple non purifiée et se présente sous la forme d'une poudre. Elle est introduite dans l'effluent dans une proportion telle qu'elle relève son pH à une valeur comprise entre 8 et 10 pour que le germanium précipite dans l'effluent. Il est prévu de traiter l'effluent sans addition préalable de soude, le pH étant de l'ordre de 4, ou de le traiter après une addition de soude prévue pour relever le pH à environ 7. Dans le premier cas, la possibilité de travailler en milieu acide permet de réduire la consommation de la soude.

Par un effet tampon de la magnésie, la phase surnageante de l'effluent après la précipitation du germanium se trouve sensiblement au même pH égal à 9,5 que celui qui prévalait au début de la précipitation. Cette valeur de pH est abaissée, si nécessaire, à une valeur acceptable pour un rejet du surnageant dans l'environnement, par addition d'un acide.

Le précipité se présente sous la forme d'une boue contenant le germanium qui était contenu dans l'effluent. Cette boue est filtrée et éventuellement séchée pour donner un "gâteau" prêt à être retraité pour extraire le germanium.

Le procédé selon l'invention est simple à mettre en oeuvre et s'applique aux installations de fabrication d'une préforme du type à dépôt chimique en phase vapeur, ou du type à dépôt par plasma, dans lesquelles le germanium est oxydé et incorporé à de la silice pour former un élément dopant dans une zone dite coeur de la préforme.

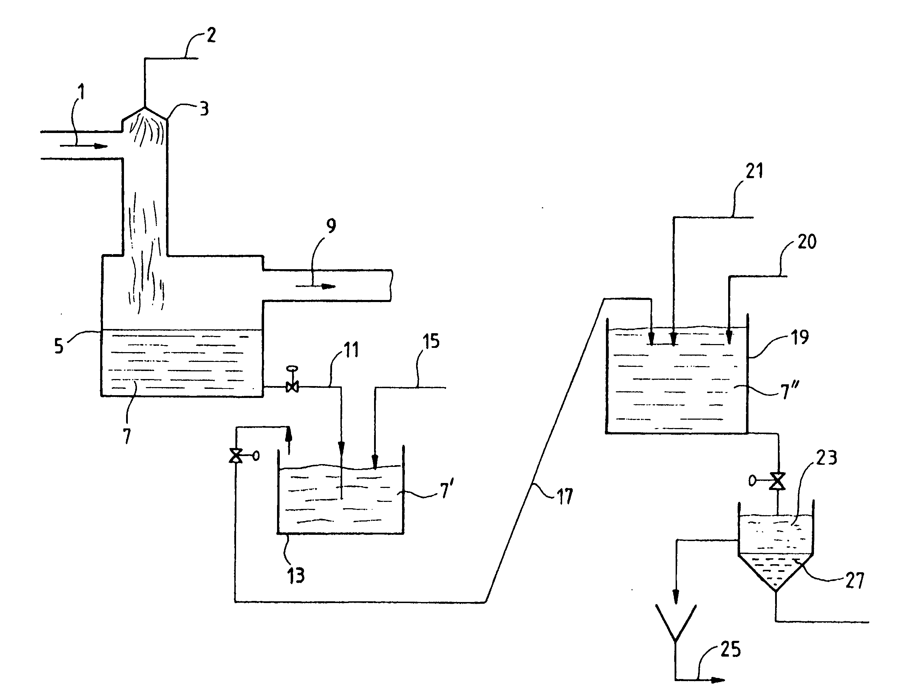

La figure unique représente un bloc diagramme schématique d'un procédé selon l'invention.

Les chlorures 1 du type HCl et GeCl₄ transportés par de l'air sont rejetés par une installation non représentée de fabrication de préformes de fibres optiques, par exemple avec un banc de dépôt chimique en phase vapeur.

L'abattage des chlorures gazeux est réalisé dans une tour 3 qui permet de pulvériser de la soude 2 sous forme de petites gouttes. Les chlorures gazeux réagissent avec les gouttes de soude pour donner dans un réservoir 5 disposé au pied de la tour, une solution 7 de chlorure de sodium et de l'hypochlorite de sodium de pH égal environ à 9,5. L'air en mouvement dans la tour est évacué vers l'extérieur 9 après avoir été purifié des chlorures gazeux.

La solution 7 recueillie dans le réservoir 5 de la tour forme un effluent. Avant de le rejeter dans l'environnement, cet effluent est déversé 11 dans un deuxième réservoir 13 et traité par addition d'acide formique 15 conduisant à la réduction de l'hypochlorite en chlorure de sodium avec un dégagement de dioxyde de carbone. Après réduction, l'effluent 7' a un pH égal environ à 4,5.

Pour récupérer le germanium présent dans l'effluent, ce dernier est déversé 17 dans un troisième réservoir 19 où l'on procède à une addition de magnésie non pure 21 se présentant sous forme d'une poudre. La magnésie est introduite dans une quantité telle que le pH de l'effluent 7" soit sensiblement égal à 9,5 pour que le germanium précipite. Cette quantité correspond à un rapport stoechiométrique entre le magnésium et le germanium typiquement de 1,5 pour 1.

Selon une variante du procédé de l'invention, on procède entre l'addition 15 d'acide formique et l'addition de magnésie 21 à une addition de soude 20 pour remonter le pH de l'effluent 7' de 4,5 à une valeur égale environ à 7.

Au cours de la précipitation, le pH de l'effluent 7" reste sensiblement constant à la valeur initiale traduisant un effet tampon de la magnésie dans l'effluent. Cette valeur est abaissée, si nécessaire, à une valeur acceptable pour un rejet du surnageant 23 dans l'environnement 25.

Le précipité se présente sous la forme d'une boue 27 qui est transportée vers un filtre-presse pour être filtrée et séchée et donner un "gâteau" prêt à être traité pour en extraire le germanium.

## Revendications

1. Procédé de traitement de rejets gazeux provenant d'une unité de fabrication d'une préforme de fibre optique et contenant du germanium, ledit procédé comprenant les étapes suivantes :
• formation d'un effluent aqueux à partir desdits rejets gazeux,
• précipitation du germanium dans ledit effluent aqueux ,
**caractérisé en ce que** ladite précipitation est effectuée par addition de magnésie MgO dans ledit effluent aqueux.

2. Procédé selon la revendication 1 **caractérisé en ce que** lesdits rejets gazeux contiennent du germanium sous forme de tétrachlorure de germanium GeCl₄ et **en ce que** ladite étape de formation d'un effluent aqueux consiste à faire réagir de la soude avec lesdits rejets gazeux, de sorte que ledit effluent aqueux contient le germanium et de l'hypochlorite.

3. Procédé selon la revendication 2 **caractérisé en ce que** ledit hypochlorite est réduit après ladite étape de formation d'un effluent aqueux et avant ladite étape de précipitation.

4. Procédé selon la revendication 3 **caractérisé en ce que** la réduction dudit hypochlorite est effectuée à l'aide d'acide formique.

5. Procédé selon la revendication 4 **caractérisé en ce que** l'on procède à une addition de soude entre ladite étape de formation d'un effluent aqueux et ladite réduction de l'hypochlorite.

6. Procédé selon l'une des revendications 1 à 5 **caractérisé en ce que** la quantité de magnésie ajoutée à l'effluent est telle qu'elle lui conférer une valeur de pH comprise entre 8 et 10.

## Claims

1. Process for the treatment of gaseous discharge products coming from a production unit for an optical fibre preform and containing germanium, said process comprising the following steps:
• formation of an aqueous effluent starting from said gaseous discharge products,
• precipitation of germanium in said aqueous effluent,
**characterised in that** said precipitation is carried out by addition of magnesia MgO to said aqueous effluent.

2. Process according to claim 1, **characterised in that** said gaseous discharge products contain germanium in the form of germanium tetrachloride GeCl₄; and said step of formation of an aqueous effluent consists in reacting sodium hydroxide solution with said gaseous discharge products so that said aqueous effluent contains germanium and hypochlorite.

3. Process according to claim 2, **characterised in that** said hypochlorite is reduced after said step of formation of an aqueous effluent and before said step of precipitation.

4. Process according to claim 3, **characterised in that** the reduction of said hypochlorite is carried out with the aid of formic acid.

5. Process according to claim 4, **characterised in that** addition of sodium hydroxide solution is carried out between said step of formation of an aqueous effluent and said reduction of hypochlorite.

6. Process according to one of claims 1 to 5, **characterised in that** the amount of magnesia added to the effluent is such that the latter is given a pH value of between 8 and 10.

## Patentansprüche

1. Verfahren zur Behandlung von Abgasen, die aus einer Vorrichtung zur Herstellung einer Vorform von optischen Glasfasern stammen und Germanium enthalten, wobei das Verfahren folgende Schritte umfasst:
• Bilden eines Abwassers aus den Abgasen,
• Ausfällen von Germanium in dem Abwasser,
**dadurch gekennzeichnet, dass** das Ausfällen durch Hinzufügen von Magnesia MgO zum Abwasser ausgeführt wird.

2. Verfahren nach Anspruch 1, **dadurch gekennzeichnet, dass** die Abgase Germanium in Form von Germaniumtetrachlorid GeCl₄ enthalten, und dass der Schritt zum Bilden eines Abwassers darin besteht, dass Soda mit den Abgasen zur Reaktion gebracht wird, so dass das Abwasser das Germanium und Hypochlorit enthält.

3. Verfahren nach Anspruch 2, **dadurch gekennzeichnet, dass** das Hypochlorit nach dem Schritt zum Bilden eines Abwassers und vor dem Ausfall-Schritt reduziert wird.

4. Verfahren nach Anspruch 3, **dadurch gekennzeichnet, dass** die Reduktion des Hypochlorits mit Hilfe von Ameisensäure durchgeführt wird.

5. Verfahren nach Anspruch 4, **dadurch gekennzeichnet, dass** man eine Zufuhr von Soda zwischen dem Schritt zum Bilden eines Abwassers und der Reduzierung von Hydrochlorit vornimmt.

6. Verfahren nach einem der Ansprüche 1 bis 5, **dadurch gekennzeichnet, dass** die zum Abwasser hinzugefügte Magnesia-Menge derart ist, dass sie ihm einen PH-Wert zwischen 8 und 10, beide Werte eingeschlossen, verleiht.
